(19) Europäisches Patentamt
European Patent Office
Office européen des brevets

(11) **EP 4 693 341 A1**

(12) **EUROPEAN PATENT APPLICATION**
published in accordance with Art. 153(4) EPC

(43) Date of publication:
**11.02.2026 Bulletin 2026/07**

(21) Application number: 24780680.5

(22) Date of filing: **28.03.2024**

(51) International Patent Classification (IPC):
*H01B 1/10* $^{(2006.01)}$    *H01B 1/06* $^{(2006.01)}$
*H01B 13/00* $^{(2006.01)}$    *H01M 10/0562* $^{(2010.01)}$

(52) Cooperative Patent Classification (CPC):
**H01B 1/06; H01B 1/10; H01B 13/00;**
**H01M 10/0562;** Y02E 60/10

(86) International application number:
**PCT/JP2024/012733**

(87) International publication number:
**WO 2024/204581 (03.10.2024 Gazette 2024/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.03.2023 JP 2023052206**

(71) Applicant: **University Public Corporation Osaka**
**Osaka-shi, Osaka 5360025 (JP)**

(72) Inventors:
• **SAKUDA, Atsushi**
  **Sakai-shi, Osaka 599-8531 (JP)**
• **HAYASHI, Akitoshi**
  **Sakai-shi, Osaka 599-8531 (JP)**

(74) Representative: **Zanoli, Enrico et al**
**Zanoli & Giavarini S.p.A.**
**Via Melchiorre Gioia, 64**
**20125 Milano (IT)**

(54) **SOLID ELECTROLYTE MATERIAL, SOLID ELECTROLYTE COMPOSITE, ELECTRODE, AND METHOD FOR PRODUCING SOLID ELECTROLYTE MATERIAL**

(57)     An object is to provide a solid electrolyte material exhibiting a high ion conductivity.

The object is achieved by a solid electrolyte material including an LGPS-like crystal phase represented by:

$$(Li_3PS4)_a(Li_4SnS4)b(LiX)_c \qquad (I)$$

(wherein a > 0; b > 0; c > 0; a + b + c = 1.0; $2.0 \le a/b \le 9.0$; $c/(a + b) \ge 0.20$, and X represents Cl, Br or I).

**EP 4 693 341 A1**

[FIG. 1]

**Description**

TECHNICAL FIELD

The present invention relates to a solid electrolyte material, a solid electrolyte composite including the solid electrolyte material, an electrode including the solid electrolyte material, and a method for manufacturing the solid electrolyte material.

BACKGROUND

In recent years, demand for lithium-ion secondary batteries for storing electric power has been increasing in vehicles such as electric vehicles and hybrid vehicles, as well as in power generation devices such as solar cells and wind power generation. Also, from the viewpoint of ensuring safety, all-solid-state batteries that use a solid electrolyte instead of liquid in the electrolyte layer are being actively studied. These lithium-ion secondary batteries and all-solid-state batteries are required to achieve even higher performance.

The solid electrolyte of the all-solid-state lithium batteries is required to have higher ion conductivity from the viewpoint of improving physical properties such as the discharge capacity of the all-solid-state lithium batteries. Therefore, various studies have been conducted. For example, Patent Literature 1 discloses that a solid electrolyte having a relatively high ion conductivity can be provided by using an LGPS-based solid electrolyte using $SnS_2$ as a raw material.

CITATION LIST

PATENT LITERATURE

[Patent Literature 1]
International Publication No. WO2019/239949

SUMMARY

PROBLEM TO BE SOLVED BY THE INVENTION

In order to obtain all-solid-state lithium batteries having excellent charge/discharge capacity, it has been desired to provide a solid electrolyte exhibiting higher ion conductivity.

MEANS FOR SOLVING THE PROBLEM

As a result of intensive studies, the present inventors have found that a Li-P-Sn-S-X-based solid electrolyte synthesized so as to contain a specific blending amount includes an LGPS-like crystal phase and exhibits excellent ionic conductivity, and have completed the present invention. Thus, the present invention provides the following inventions according to [Embodiment 1] to [Embodiment 13].

[Embodiment 1]

A solid electrolyte material including an LGPS-like crystal phase represented by

$$(Li_3PS4)_a(Li_4SnS4)b(LiX)_c \qquad (I)$$

(wherein a > 0; b > 0; c > 0; a + b + c = 1.0; $2.0 \leq a/b \leq 9.0$; $c/(a+b) \geq 0.20$, and X represents Cl, Br or I).

[Embodiment 2]

The solid electrolyte material according to [Embodiment 1], wherein X is I.

[Embodiment 3]

The solid electrolyte material according to [Embodiment 1] or [Embodiment 2], wherein $c/(a + b) \geq 0.25$.

[Embodiment 4]

The solid electrolyte material according to any one of [Embodiment 1] to [Embodiment 3], wherein c = 0.33; and $2.0 \leq a/b \leq 7.0$.

[Embodiment 5]

The solid electrolyte material according to [Embodiment 1] or [Embodiment 3], wherein c = 0.33; a/b = 3; and c/(a + b) = 0.5.

[Embodiment 6]

The solid electrolyte material according to any one of [Embodiment 1] to [Embodiment 5], wherein the LGPS-like crystal phase is a crystal phase having an X-ray diffraction pattern using CuK$\alpha$ radiation characterized by:

having a peak at $2\theta = 20.0° \pm 0.5°$, $23.5° \pm 0.5°$, $29.0° \pm 0.5°$, $41.0° \pm 1.0°$, $47.0° \pm 1.0°$;
a peak intensity of the peak at $20.0° \pm 0.5°$ being greater than a peak intensity of the peak at $23.5° \pm 0.5°$; and
peak intensities of the peaks at $2\theta = 20.0° \pm 0.5°$ and $29.0° \pm 0.5°$ being both greater than peak intensities of the peaks at $41.0° \pm 1.0°$ and $47.0° \pm 1.0°$.

[Embodiment 7]

A solid electrolyte composite comprising the solid electrolyte material according to any one of [Embodiment 1] to [Embodiment 6].

[Embodiment 8]

An electrode comprising the solid electrolyte material according to any one of [Embodiment 1] to [Embodiment 6] or the solid electrolyte composite according to [Embodiment 7].

[Embodiment 9]

A method for manufacturing a solid electrolyte material including an LGPS-like crystal phase represented by the following composition formula:

$$(Li_3PS4)_a(Li_4SnS4)b(LiX)_c \qquad (I)$$

(wherein a > 0; b > 0; c > 0; a + b + c = 1.0; $2.0 \leq a/b \leq 9.0$; $c/(a + b) \geq 0.20$, and X represents Cl, Br or I), the method comprising:

a mixing step of raw materials so as to contain all of Li, P, S, Sn, and X, the raw materials being selected at least one from each of a first substance containing Li and/or P, a second substance containing Sn and/or S, and a third substance containing X (where X is Cl, Br, or I);
an amorphization step of amorphizing the mixture obtained in the mixing step; and

a heat treatment step of heat-treating an amorphous body obtained in the amorphization step.

[Embodiment 10]

The method for manufacturing the solid electrolyte material according to [Embodiment 9], wherein in the amorphization step, the mixture is amorphized using a mechanochemical method.

[Embodiment 11]

The method for manufacturing the solid electrolyte material according to [Embodiment 9] or [Embodiment 10], wherein the first substance is $Li_2S$ and $P_2S_5$, the second substance is $SnS_2$, and the third substance is LiX.

[Embodiment 12]

The method for manufacturing the solid electrolyte material according to any one of [Embodiment 9] to [Embodiment 11], wherein X is I.

[Embodiment 13]

The method for manufacturing the solid electrolyte material according to any one of [Embodiment 9] to [Embodiment 12], wherein in the heat treatment step, the heat treatment is performed at a temperature of 200 to 300°C.

ADVANTAGEOUS EFFECT OF INVENTION

The present invention provides a novel solid electrolyte material including an LGPS-like crystal phase and exhibiting excellent ionic conductivity.

BRIEF DESCRIPTION OF THE DRAWINGS

FIG. 1 is a graph showing X-ray diffraction patterns of materials of Examples 1 to 4 and Reference Samples 1 and 2.
FIG. 2 is a graph showing X-ray diffraction patterns of materials of Comparative Examples 1 to 8.

DETAILED DESCRIPTION

In the present specification, "x to y" (x and y are specific values) means x or more and y or less unless otherwise specified. In addition, in each numerical value as described, a value obtained by rounding off a numerical value equal to or less than the number of significant digits is encompassed (for example, if a certain numerical value is described as 100, 100 encompasses 99.5 to 100.4). In another example, if a certain numerical value is 0.5, 0.5 encompasses 0.45 to 0.54).

(Solid Electrolyte Material Having LGPS-Like Crystal Phase)

A solid electrolyte material including an LGPS-like crystal phase (hereinafter, also simply referred to as a solid electrolyte material) according to the present invention is a Li-P-Sn-S-X-based solid electrolyte material comprised of the following composition formula (I):

$$(Li_3PS4)_a(Li_4SnS4)b(LiX)_c \qquad (I)$$

(wherein $a > 0$; $b > 0$; $c > 0$; $a + b + c = 1.0$; $2.0 \leq a/b \leq 9.0$; $c/(a + b) \geq 0.20$, and X represents Cl, Br or I).

In the above formula (I), a, b, and c are any values satisfying $a > 0$; $b > 0$; $c > 0$; $a + b + c = 1.0$; $2.0 \leq a/b \leq 9.0$; and $c/(a + b) \geq 0.20$. Among these, a lower limit of a/b is preferably 2.0 or more from the viewpoint of increasing ion conductivity. More preferably, it is 2.2 or more. From the viewpoint of water resistance, an upper limit of a/b is preferably 8.5 or less, more preferably 8.2 or less, even more preferably 8.0 or less, even more preferably 7.7 or less, even more preferably 7.4 or less, even more preferably 7.2 or less, and most preferably 7.0 or less. A range of a/b is, for example, preferably $2.0 \leq a/b \leq 8.5$, more preferably $2.0 \leq a/b \leq 8.2$, more preferably $2.0 \leq a/b \leq 8.0$, more preferably $2.0 \leq a/b \leq 7.7$, more preferably $2.0 \leq a/b \leq 7.4$, more preferably $2.0 \leq a/b \leq 7.2$, more preferably $2.0 \leq a/b \leq 7.0$, and most preferably $2.2 \leq a/b \leq 7.0$ from the viewpoint of both the high ion conductivity and the water resistance. In addition, if $c = 0.33$, a/b is more preferably in the range of $2.0 \leq a/b \leq 7.0$, and even more preferably $2.2 \leq a/b \leq 7.0$. From the viewpoint of promoting crystallization, $c/(a + b)$ is preferably $c/(a + b) \geq 0.25$, may be $c/(a + b) \geq 0.30$, and may be $c/(a + b) \geq 0.40$. From the viewpoint of providing the solid electrolyte material having more excellent ion conductivity, a/b is preferably $2.0 \leq a/b \leq 7.0$ and/or $c/(a + b)$ is preferably $c/(a + b) \geq 0.25$, more preferably $2.2 \leq a/b \leq 7.0$ and/or $c/(a + b) \geq 0.30$, and most preferably $2.2 \leq a/b \leq 7.0$ and $c/(a + b) \geq 0.4$.

As for the range of a in the above formula (I), as long as the inequality in the formula (I) is satisfied, for example, the lower limit is preferably 0.33 or more from the viewpoint of increasing the ion conductivity. It is more preferably 0.35 or more, even more preferably 0.37 or more, even more preferably 0.40 or more, even more preferably 0.42 or more, even more preferably 0.43 or more, and most preferably 0.44 or more. The upper limit is preferably 0.74 or less from the viewpoint of the stability of the electrolyte. It is more preferably 0.72 or less, even more preferably 0.70 or less, even more preferably 0.66 or less, even more preferably 0.65 or less, even more preferably 0.63 or less, even more preferably 0.60 or less, and most preferably 0.59 or less. A range of a is, for example, preferably $0.33 \leq a \leq 0.74$, more preferably $0.35 \leq a \leq 0.72$, more preferably $0.37 \leq a \leq 0.70$, more preferably $0.40 \leq a \leq 0.70$, more preferably $0.40 \leq a \leq 0.66$, more preferably $0.40 \leq a \leq 0.65$,

more preferably $0.42 \leq a \leq 0.62$, more preferably $0.43 \leq a \leq 0.60$, and most preferably $0.44 \leq a \leq 0.59$ from the viewpoint of both the high ion conductivity and the stability of the electrolyte.

As for the range of b in the above formula (I), as long as the inequality in the formula (I) is satisfied, for example, the lower limit is preferably 0.01 or more from the viewpoint of improving the water resistance. It is more preferably 0.05 or more, even more preferably 0.08 or more. The upper limit is preferably 0.27 or less in order not to decrease the ion conductivity. It is more preferably 0.25 or less, even more preferably 0.24 or less, most preferably 0.225 or less. A range of b is, for example, preferably $0 < b \leq 0.27$, more preferably $0 < b \leq 0.25$, more preferably $0.01 \leq b \leq 0.25$, more preferably $0.05 \leq b \leq 0.25$, more preferably $0.05 \leq b \leq 0.24$, more preferably $0.05 \leq b \leq 0.225$, and most preferably $0.08 \leq b \leq 0.225$ from the viewpoint of both improvement in water resistance and the high ion conductivity.

As for the range of c in the above formula (I), as long as the inequality in the formula (I) is satisfied, for example, the lower limit is preferably 0.167 or more to promote amorphization. The upper limit that is more preferably 0.17 or more, even more preferably 0.18 or more, even more preferably 0.19 or more, more preferably 0.199 or more, and most preferably 0.20 or more is preferably less than 1.0 to suppress the generation of halogen gas. It is more preferably 0.99 or less, more preferably 0.95 or less, even more preferably 0.90 or less, even more preferably 0.80 or less, even more preferably 0.70 or less, even more preferably 0.60 or less, even more preferably 0.50 or less, even more preferably 0.40 or less, and most preferably 0.34 or less. A range of c is, for example, preferably $0.167 \leq c < 1.0$, more preferably $0.17 \leq c < 1.0$, more preferably $0.17 \leq c \leq 0.99$, more preferably $0.17 \leq c \leq 0.95$, more preferably $0.18 \leq c \leq 0.90$, more preferably $0.19 \leq c \leq 0.80$, more preferably $0.199 \leq c \leq 0.80$, more preferably $0.20 \leq c \leq 0.70$, more preferably $0.20 \leq c \leq 0.60$, more preferably $0.20 \leq c \leq 0.50$, more preferably $0.20 \leq c \leq 0.40$, and most preferably $0.2 \leq c \leq 0.34$ from the viewpoint of both promotion of amorphization and suppression of the generation of halogen gas.

X in the above formula (I) is selected from Cl, Br or I. X may be only one of these, or may be more than one selected therefrom. Of these, X preferably includes at least I, and is more preferably I. By having X being I, it is possible to provide a solid electrolyte material having more excellent ion conductivity.

Specific examples of the solid electrolyte material represented by the above formula (I) include $Li_{7.25}P_{1.75}Sn_{0.25}S_8I[(Li_3PS_4)_{0.583}(Li_4SnS_4)_{0.083}(LiI)_{0.333}$ or $(Li_3PS_4)_{7/12}(Li_4SnS_4)_{1/12}(LiI)_{4/12}]$, $Li_{7.25}P_{1.75}Sn_{0.25}S_8Cl[(Li_3PS_4)_{0.583}(Li_4SnS_4)_{0.083}(LiCl)_{0.333}$ or $(Li_3PS_4)_{7/12}(Li_4SnS_4)_{1/12}(LiCl)_{4/12}]$, $Li_{7.25}P_{1.75}Sn_{0.25}S_8Br[(Li_3PS_4)_{0.583}(Li_4SnS_4)_{0.083}(LiBr)_{0.333}$ or $(Li_3PS_4)_{7/12}(Li_4SnS_4)_{1/12}(LiBr)_{4/12}]$, $Li_{7.5}P_{1.5}Sn_{0.5}S_8I[(Li_3PS_4)_{0.5}(Li_4SnS_4)_{0.167}(LiI)_{0.333}$ or $(Li_3PS_4)_{3/6}(Li_4SnS_4)_{1/6}(LiI)_{2/6}]$, $Li_{7.5}P_{1.5}Sn_{0.5}S_8Cl[(LhPS_4)_{0.5}(Li_4SnS_4)_{0.167}(LiCl)_{0.333}$ or $(Li_3PS_4)_{3/6}(Li_4SnS_4)_{1/6}(LiCl)_{2/6}]$, $Li_{7.5}P_{1.5}Sn_{0.5}S_8Br[(Li_3PS_4)_{0.5}(Li_4SnS_4)_{0.167}(LiBr)_{0.333}$ or $(Li_3PS_4)_{3/6}(Li_4SnS_4)_{1/6}(LiBr)_{2/6}]$, $Li_{23}P_4Sn_2S_{24}I_3[(Li_3PS_4)_{0.444}(Li_4SnS_4)_{0.222}(LiI)_{0.333}$ or $(Li_3PS_4)_{4/9}(Li_4SnS_4)_{2/9}(LiI)_{3/9}$, $Li_{23}P_4Sn_2S_{24}Cl_3[(Li_3PS_4)_{0.444}(Li_4SnS_4)_{0.222}(LiCl)_{0.333}$ or $(Li_3PS_4)_{4/9}(Li_4SnS_4)_{2/9}(LiCl)_{3/9}]$, $Li_{23}P_4Sn_2S_{24}Br_3[(Li_3PS_4)_{0.444}(Li_4SnS_4)_{0.222}(LiBr)_{0.333}$ or $(Li_3PS_4)_{4/9}(Li_4SnS_4)_{2/9}(LiBr)_{3/9}]$, $Li_{14}P_3SnS_{16}I[(Li_3PS_4)_{0.6}(Li_4SnS_4)_{0.2}(LiI)_{0.2}]$, $Li_{14}P_3SnS_{16}Cl[(Li_3PS_4)_{0.6}(Li_4SnS_4)_{0.2}(LiCl)_{0.2}]$, $Li_{14}P_3SnS_{16}Br[(Li_3PS_4)_{0.6}(Li_4SnS_4)_{0.2}(LiBr)_{0.2}]$.

In one embodiment, the solid electrolyte material according to the present invention can be comprised of the following composition formula (II):

$$(Li_3PS_4)_a(Li_4SnS_4)_b(LiX)_{0.33} \qquad (II)$$

(wherein $a > 0$; $b > 0$; $a + b = 0.67$; $2.0 \leq a/b \leq 7.0$; $c/(a + b) \geq 0.20$, and X represents Cl, Br or I). This formula is equivalent to formula I with $c = 0.33$ and $2.0 \leq a/b \leq 7.0$.

In the above formula (II), a, b, and c are any values satisfying $a > 0$; $b > 0$; $c > 0$; $a + b + c = 1.0$; $2.0 \leq a/b \leq 9.0$; and $c/(a + b) \geq 0.25$, and may be selected from a, b, and c in the above formula (I). X is also as described above. The solid electrolyte material according to the present invention being represented by the formula (II) can provide a solid electrolyte material having more excellent ion conductivity.

In one embodiment, the solid electrolyte material according to the present invention can be composed of the following composition formula (III):

$$(Li_3PS_4)_a(Li_4SnS_4)_b(LiI)_{0.33} \qquad (III)$$

(wherein $a > 0$; $b > 0$; $a + b = 0.67$; $2.0 \leq a/b \leq 7.0$; $c/(a + b) \geq 0.20$). This formula is equivalent to formula I with $c = 0.33$, $2.0 \leq a/b \leq 7.0$, and $X = I$.

In the above formula (III), a, b, and c are any values satisfying $a > 0$; $b > 0$; $c > 0$; $a + b + c = 1.0$; $2.0 \leq a/b \leq 9.0$; and $c/(a + b) \geq 0.25$, and may be selected from a, b, and c in the above formula (I). The solid electrolyte material according to the present invention as represented by the formula (III) can provide a solid electrolyte material having more excellent ion conductivity.

In one embodiment, the solid electrolyte material according to the present invention can be composed of the following composition formula (IV):

$$(Li_3PS4)_a(Li_4SnS4)b(LiX)_c \qquad (IV)$$

(wherein a > 0; b > 0; c > 0; a + b + c = 1.0; $2.8 \leq a/b \leq 3.2$; $0.48 \leq c/(a + b) \leq 0.52$, and X represents Cl, Br or I).

In the above formula (IV), a, b, and c are any values satisfying a > 0; b > 0; c > 0; a + b + c = 1.0; $2.8 \leq a/b \leq 3.2$; and $0.48 \leq c/(a + b) \leq 0.52$, and may be selected from a, b, and c in the above formula (I). X is also as described above. The solid electrolyte material according to the present invention as represented by the formula (IV) can provide a solid electrolyte material having more excellent ion conductivity. Specific examples of the solid electrolyte material represented by the formula (V) include $(Li_3PS_4)_{0.5}(Li_4SnS_4)_{0.167}(LiX)_{0.333}$ [or $(Li_3PS_4)_{3/6}(Li_4SnS_4)_{1/6}(LiX)_{2/6}$]. The solid electrolyte material according to the present invention as represented by the formula (IV) can provide a solid electrolyte material having more excellent ion conductivity.

In one embodiment, the solid electrolyte material according to the present invention can be composed of the following composition formula (V):

$$(Li_3PS_4)_a(Li_4SnS_4)_b(LiI)_c \qquad (V)$$

(wherein a > 0; b > 0; c > 0; a + b + c = 1.0; $2.8 \leq a/b \leq 3.2$; $0.48 \leq c/(a + b) \leq 0.52$).

In the above formula (IV), a, b, and c are any values satisfying a > 0; b > 0; c > 0; a + b + c = 1.0; $2.8 \leq a/b \leq 3.2$; and $0.48 \leq c/(a + b) \leq 0.52$, and may be selected from a, b, and c in the above formula (I). Specific examples of the solid electrolyte material represented by the formula (V) include $(Li_3PS_4)_{0.5}(Li_4SnS_4)_{0.167}(LiI)_{0.333}$ [or $(Li_3PS_4)_{3/6}(Li_4SnS_4)_{1/6}(LiI)_{2/6}$]. The solid electrolyte material according to the present invention as represented by the formula (V) can provide a solid electrolyte material having more excellent ion conductivity.

Raw materials for the solid electrolyte material represented by the above formulas (I) to (V) [and formula (VI) described below] are not particularly limited as long as the solid electrolyte material represented by the above formulas (I) to (V) [and formula (VI) described below] can be formed, and examples thereof include Li, S, P, Cl, Br, I, $Li_2S$, LiCl, LiBr, LiI, $P_2S_5$, $SnS_2$, $Li_3PS_4$, and $Li_4SnS_4$. Among these raw materials, it is preferable to select at least one from each of a first substance containing Li and/or P, a second substance containing Sn and/or S, and a third substance containing X (X is Cl, Br, or I) so as to contain all of Li, P, S, Sn, and X.

The solid electrolyte material represented by the above formulas (I) to (V) [and formula (VI) described later] includes an LGPS-like crystal phase. Here, the LGPS-like crystal phase can be confirmed by having the following characteristics in an X-ray diffraction pattern using CuKα radiation:

- a characteristic peak at $2\theta = 20.0° \pm 0.5°$, $23.5° \pm 0.5°$, $29.0° \pm 0.5°$, $41.0° \pm 1.0°$, $47.0° \pm 1.0°$;
- a peak intensity of the peak at $20.0° \pm 0.5°$ is greater than a peak intensity of the peak at $23.5° \pm 0.5°$; and
- peak intensities of the peaks at $2\theta = 20.0° \pm 0.5°$ and $29.0° \pm 0.5°$ are both greater than peak intensities of the peaks at $41.0° \pm 1.0°$ and $47.0° \pm 1.0°$.

The peak at $2\theta = 20.0° \pm 0.5°$ may be a single peak or double peaks, and is preferably a single peak. The double peaks may partially overlap. When double peaks are present at $20 = 20.0° \pm 0.5°$, a peak intensity of at least one of the double peaks may be higher than the peak intensity of a peak present at $23.5° \pm 0.5°$.

Peak intensities of the peaks present at $2\theta = 20.0° \pm 0.5°$, $23.5° \pm 0.5°$, and $29.0° \pm 0.5°$ are such that the peak intensity of each of the peak present at $20.0° \pm 0.5°$, the peak present at $23.5° \pm 0.5°$, and the peak present at $29.0° \pm 0.5°$ is larger than the peak intensity of each of the peak present at $41.0° \pm 1.0°$ and the peak present at $47.0° \pm 1.0°$. The peak intensity referred to herein is an intensity of a peak based on a baseline, and baseline calculation of the X-ray diffraction pattern can be performed using commercially available analysis software (for example, SmartLab Studio II manufactured by Rigaku Corporation).

The solid electrolyte according to the present invention has a crystal structure similar to that of the LGPS-based solid electrolyte known so far, but has a part different from the result of the X-ray diffraction pattern of the LGPS-based solid electrolyte known so far (for example, the LGPS-based solid electrolyte described in Patent Literature 1 has characteristic peaks at $2\theta = 19.80° \pm 0.50°$, $20.10° \pm 0.50°$, $26.60° \pm 0.50°$, and $29.10° \pm 0.50°$ in the X-ray diffraction pattern using CuKα radiation, but this X-ray diffraction pattern is slightly different from the X-ray diffraction pattern of the LGPS-like crystal phase according to the present invention). For example, in the LGPS solid electrolyte known so far, two peaks are confirmed in the vicinity of $2\theta = 20°$, but the present invention has a characteristic that these peaks overlap and appear as a single peak. Therefore, the inventors consider that whether or not the solid electrolyte phase includes the LGPS-like crystal phase can be determined from the X-ray diffraction pattern also by the presence or absence of a X-ray peak and the magnitude of the peak intensity as described above in the present invention.

In one embodiment, the solid electrolyte material according to the present invention may be represented by the following composition formula (VI):

$$(Li_3PS4)_a(Li_4SnS4)b(LiX)_c \qquad (VI)$$

(wherein a > 0; b > 0; c > 0; a + b + c = 1.0; $2.0 \leq a/b \leq 9.0$; $c/(a + b) \geq 0.20$, and X represents Cl, Br or I). The solid electrolyte material includes an LGPS-like crystal phase that is represented by the formula (VI) and that has an X-ray diffraction pattern using CuKα radiation which has a peak at least at $2\theta = 20.0° \pm 0.5°$, $23.5° \pm 0.5°$, $29.0° \pm 0.5°$, $41.0° \pm 1.0°$, $47.0° \pm 1.0°$; in which a peak intensity of the peak at $20.0° \pm 0.5°$ is greater than a peak intensity of the peak at $23.5° \pm 0.5°$; and in which peak intensities of the peaks at $2\theta = 20.0° \pm 0.5°$ and $29.0° \pm 0.5°$ are greater than peak intensities of the peaks at $41.0° \pm 1.0°$ and $47.0° \pm 1.0°$, respectively.

(Method for manufacturing a solid electrolyte material)

The present invention provides a method for manufacturing a solid electrolyte material including an LGPS-like crystal phase represented by the following composition formula:

$$(Li_3PS4)_a(Li_4SnS4)b(LiX)_c \qquad (I)$$

(wherein a > 0; b > 0; c > 0; a + b + c = 1.0; $2.0 \leq a/b \leq 9.0$; $c/(a + b) \geq 0.20$, and X represents Cl, Br or I), the method comprising:
taking a first substance containing Li and/or P, a second substance containing Sn and/or S, and a third substance containing X (where X is Cl, Br, or I) as a raw material; a mixing step of selecting at least one from each of the first substance, the second substance, and the third substance to mix the raw material so as to contain all of Li, P, S, Sn, and X; an amorphization step of amorphizing the mixture obtained in the mixing step; and a heat treatment step of heat-treating an amorphous body obtained in the amorphization step.
In the above formula (I), a, b, c and X are as described above. Hereinafter, each step will be described.

(Mixing step)

In the mixing step, the first substance, the second substance, and the third substance are mixed to prepare the mixture. The first substance, the second substance, and the third substance used in the mixing step are as described above. The mixing ratio of the first substance, the second substance, and the third substance can be appropriately adjusted so as to conform to each combination of a, b, and c in the above formula (I). For example, when $Li_2S$ and $P_2S_5$ are selected as the first substance, $SnS_2$ is selected as the second substance, and LiX is selected as the third substance for the combination, the first substance, the second substance, and the third substance can be combined at a ratio (molar ratio) of 16:1:4, 8:1:1, 8:1:2, or 12:2:3. Among these, a combination of the first, second and third substances in a 8:1:2 ratio is preferable, and an equivalent combination in which LiX is LiI is even more preferable.
The first substance, the second substance, and the third substance may be subjected to the heating or drying step before mixing. By subjecting these substances to the heating or drying step before mixing, moisture contained in each substance can be removed.
A mixing method is not particularly limited as long as it can be used in this field; examples thereof include a method using a mortar, a V-type mixer, a sand mill or a mixer (a homo mixer, a planetary mixer or the like). The mixing step may be performed by a mechanochemical treatment described later. In this case, the mixing step and the mechanochemical treatment step are performed simultaneously.
Although the mixing time is not particularly limited, it can range, for example, from 1 minute to 120 hours, and is preferably within a range of 10 minutes to 96 hours. A lower limit of the mixing time can be, for example, 1 minute, 5 minutes, 10 minutes, 30 minutes, 35 minutes, or 1 hour. An upper limit of the mixing time can be, for example, 120 hours, 96 hours, 85 hours, 80 hours, 72 hours, 48 hours, 36 hours, or 24 hours.

(Amorphization step)

The mixture is subjected to an amorphization step to form an amorphous body. The amorphous body is composed of an amorphous phase (glass phase). An amorphous phase refers to a phase that does not exhibit distinct crystallinity. The absence of distinct crystallinity can be confirmed by, for example, the absence of distinct crystallites observed using a transmission electron microscope (TEM) or a scanning electron microscope (SEM). Alternatively, it can be confirmed by subjecting the solid electrolyte material to X-ray diffraction (XRD) using CuKα radiation, and subjecting the obtained diffraction peak to crystal structure analysis by Rietveld refinement. Specifically, it can be confirmed by the presence of a broad peak or halo pattern attributable to an amorphous phase. Here, the broad peak means that a full width at half maximum is, for example, 0.5 or more, more specifically 1.0 or more.
The amorphization of the mixture is not particularly limited as long as it is a method capable of amorphizing the mixture; examples thereof include treatment by a mechanochemical method. Alternatively, a vapor phase method such as a physical vapor deposition (PVD) method or a chemical vapor deposition (CVD) method, or a liquid phase method may be used, and treatment by a mechanochemical method is preferable. The mechanochemical treatment may be a wet method or a dry method.

A treatment device for mechanochemical treatment is not particularly limited as long as it can mix while applying mechanical energy. For example, a ball mill, a bead mill, a jet mill, a vibration mill, a disk mill, a turbo mill, mechanofusion or the like can be used. A ball mill is preferable because large mechanical energy can be obtained. Among the ball mills, a planetary ball mill is preferable because the pot rotates on its own axis and the base plate orbits in the opposite direction of its rotation, thereby efficiently generating high impact energy.

Time for the mechanochemical treatment is not particularly limited, and can be appropriately set according to the scale and performance of a treatment apparatus and the mixture. The treatment time can be, for example, 10 minutes to 120 hours, but is preferably 30 minutes to 80 hours. A lower limit of the treatment time may be, for example, 10 minutes, 30 minutes, 1 hour, or 5 hours, and an upper limit may be 120 hours, 100 hours, or 80 hours. From the viewpoint of productivity, the time for mechanochemical treatment is more preferably as short as possible, provided the purpose of amorphization can be achieved. When a planetary ball mill is used for mechanochemical treatment, the diameter of the balls is not particularly limited, but may be selected from a range of 0.1 to 20 mm, for example. The rotational speed may be selected from a speed of 150 to 600 rpm, for example. An output is also not particularly limited, but may be selected from conditions that result in, for example, 1 to 100 kWh/kg of starting materials.

(Heat treatment step)

By heating the amorphous body obtained in the amorphization step, the solid electrolyte material including the LGPS-like crystal phase can be obtained. The solid electrolyte material including the LGPS-like crystal phase may be a glass ceramic. Glass ceramic is a material having a glass phase and a (deposited) crystal phase dispersed in the glass phase. The glass ceramic can be formed, for example, by heating a glass phase at a temperature of its crystallization temperature or higher to crystallize (at least a portion of) the material. The crystallization temperature can be measured, for example, by differential thermal analysis (DTA). The fact that the solid electrolyte material is glass ceramic can be confirmed, for example, by using TEM or SEM to observe that a plurality of crystal phases are contained in the glass phase. Alternatively, it may be determined that the solid electrolyte material has become glass ceramic if a peak not observed in the mixture before heating is confirmed in XRD using CuK$\alpha$ radiation.

The heating temperature can be appropriately set according to the crystallization temperature of the amorphous body, but is preferably set in a range of 100°C to 500°C, more preferably in a range of 150°C to 400°C, more preferably in a range of 200°C to 300°C, more preferably in a range of 210°C to 280°C, and more preferably in a range of 220°C to 250°C. If the treatment is performed at a high temperature of 600°C or higher, a $Li_4PS_4X$ phase (where X is Cl, Br, or I) is generated preferentially.

The heating time is not particularly limited and may be appropriately set, but can range, for example, from 1 minute to 24 hours, and is preferably in a range of 5 minutes to 12 hours, more preferably in a range of 30 minutes to 6 hours, and more preferably in a range of 30 minutes to 3 hours.

Heating may be performed only once or multiple times. When performing multiple times, a heating temperature and heating time of each time are preferably within the above-described ranges.

A temperature increase rate at the start of heating is not particularly limited, and can be set appropriately. For example, it may be appropriately set in a range of 10°C/min to 1000°C/min.

A heating method is not particularly limited as long as the above-described temperature increase rate can be realized. For the heating, for example, an electric furnace, a hot plate, a muffle furnace, a high-frequency induction heating device, a rotary kiln, a sand bath and a salt bath can be used. The heating device preferably has a function of regulating temperature and time.

The manufacturing method may include a step of cooling the material after heating. The solid electrolyte material after heating may be slowly cooled to room temperature as it is, or may be rapidly cooled using any cooling device. The cooling method is not particularly limited, and it may be cooled by natural cooling, or it may be cooled slowly or rapidly using any cooling device. As a cooling device, for example, a liquid quench coagulation device, a quench flake production device, an in-liquid spinning device, a gas atomization device, a water atomization device, a rotating disk device or the like can be used.

Each treatment step is preferably performed under an inert atmosphere (for example, under a nitrogen atmosphere, an argon atmosphere, a helium atmosphere, or the like). In addition, it is preferable that the treatment be carried out in an environment where a water content is 1000 ppm or less and a concentration of oxygen is 1000 ppm or less.

Each treatment process may be performed under a pressure lower or higher than a normal pressure. The normal pressure refers to, for example, a range of ± 200 hPa of 1013 hPa. In addition, the pressure conditions may be varied, such as gradually pressurizing, gradually reducing the pressure, or using the normal pressure during heating but pressurizing during cooling.

(Solid electrolyte composite)

The present invention provides a solid electrolyte composite containing the solid electrolyte material represented by the above formulas (I) to (VI). In addition to the solid electrolyte material represented by the above formulas (I) to (VI), the solid electrolyte composite may be mixed with a solid electrolyte other than the solid electrolyte material of the present invention, a binding material, a conductive material and the like. A percentage of the solid electrolyte material of the present invention in the solid electrolyte composite can be, for example, 40 mass% or more, 50 mass% or more, 60 mass% or more, 70 mass% or more, 80 mass% or more, 90 mass% or more, or 95 mass% or more.

The binding material is not particularly limited, and examples thereof include a fluorine-based polymer, a polyolefin-based polymer, a poly(meth)acrylic polymer, a polyvinyl-based polymer, a polystyrene-based polymer, a polyimide-based polymer, a polyester-based polymer, a cellulose-based polymer, and a polyacrylonitrile-based polymer. Specific examples thereof include polyvinylidene fluoride (PVDF), polytetrafluoroethylene, polyvinyl alcohol, polyvinyl acetate, polymethyl methacrylate, polyethylene, polypropylene, styrene butadiene rubber, acrylonitrile butadiene rubber, polyimide, polyamide, carboxymethyl cellulose, polyacrylonitrile, and copolymers thereof. The binding material may be one type of binding material or a combination of a plurality of binding materials. When the solid electrolyte material of the present invention is mixed using a solvent, the solvent is preferably a solvent that does not cause a side reaction with the solid electrolyte material of the present invention.

A content of the binding material in the solid electrolyte composite is not particularly limited, and may be appropriately selected from a range of, for example, 0 to 40 mass%. Of these, it is preferable that the content be 30 mass% or less, more preferably 20 mass% or less, more preferably 10 mass% or less, and preferably 5 mass% or less.

Two main types of the conductive material are carbon-based conductive material and metal-based conductive material. Examples of the carbon-based conductive material include nanocarbon or fibrous carbon (for example, vapor-grown carbon fiber (VGCF) or carbon nanofiber), and more specific examples thereof include natural graphite, artificial graphite, acetylene black, Ketjen black, and furnace black. Examples of the metal-based conductive material include metals such as Cu, Ni, Al, Ag, Au, Pt, Zn, and Mn, and alloys thereof. Among these, the carbon-based conductive material is preferably used. The conductive material may be one type of conductive material or a combination of a plurality of conductive materials.

A content of the conductive material in the solid electrolyte composite is not particularly limited. For example, the content may be appropriately selected from a range of 0 to 40 mass%. Of these, 30 mass% or less is preferable, and 20 mass% or less is more preferable.

The solid electrolyte other than the solid electrolyte materials represented by the above formulas (I) to (VI) contained in the solid electrolyte composite is not particularly limited, and examples thereof include a sulfide-based solid electrolyte, an oxide-based solid electrolyte, and a halide solid electrolyte. The solid electrolyte other than the solid electrolyte materials represented by the above formulas (I) to (VI) may be glass or glass ceramic.

Examples of the sulfide-based solid electrolyte include $Li_{10}GeP_2S_{12}$, $Li_{9.54}Si_{1.74}P_{1.44}S_{11.7}Cl_{0.3}$, $Li_{7-y}PS_{6-y}Z_y$ (where Z = Cl or Br), $Li_6PS_5I$, $Li_2S-P_2S_5$, $Li_2S-P_2S_5$-LiI, $Li_2S-P_2S_5$-LiI-LiBr, $Li_2S-P_2S_5$-$Li_2O$, $Li_2S-P_2S_5$-$Li_2O$-LiI, $Li_2S-SiS_2$, $Li_2S-SiS_2$-LiI, $Li_2S-SiS_2$-LiBr, $Li_2S-SiS_2$-LiCl, $Li_2S-SiS_2$-$B_2S_3$-LiI, $Li_2S-SiS_2$-$P_2S_5$-LiI, $Li_2S-B_2S_3$, $Li_2S-P_2S_5$-$GeS_2$, LiI-$Li_2S-P_2O_5$, LiI-$Li_3PO_4$-$P_2S_5$, $Li_2S-P_2S_5$, $Li_7P_3S_{11}$, $Li_3PS_4$, and $Li_{3.25}P_{0.75}S_4$. One of these sulfide-based solid electrolytes may be used alone or two or more may be used in combination.

Examples of the oxide-based solid electrolyte material include $Li_2O-B_2O_3-P_2O_3$, $Li_2O-SiO_2$, $Li_2O-P_2O_5$, $Li_2O-B_2O_3-SiO_2$, $Li_5La_3Ta_2O_{12}$, $Li_7La_3Zr_2O_{12}$, $Li_6BaLa_2Ta_2O_{12}$, $Li_{3.6}Si_{0.6}P_{0.4}O_4$ and $Li_3BO_3-Li_2SO_4-Li_2CO_3$. One of these oxide-based solid electrolytes may be used alone or two or more may be used in combination.

Examples of the halide-based solid electrolyte include $Li_6YCl_6$, $Li_3YBr_6$. Among these, the sulfide-based solid electrolyte is preferable, and an argyrodite-type sulfide solid electrolyte such as $Li_6PS_5I$, $Li_{7-y}PS_{6-y}Z_y$ (where Z = Cl or Br) or an LGPS-based sulfide solid electrolyte such as $Li_{10}GeP_2S_{12}$ is more preferable.

A range of the content of the solid electrolyte other than the solid electrolyte materials represented by the above formulas (I) to (VI) contained in the solid electrolyte composite is not particularly limited, but can be within a range from 0.1 to 50 mass%, for example. Of these, 40 mass% or less is more preferable, and 30 mass% or less is more preferable.

The solid electrolyte composite can be formed by mixing the solid electrolyte material represented by the above formulas (I) to (VI) with a solid electrolyte other than the solid electrolyte material represented by the above formulas (I) to (VI), a binding material, a conductive material and the like. A mixing method is not particularly limited as long as it can be used in this field, and for example, a method used in the above-described mixing method can be used.

The solid electrolyte composite and the solid electrolyte material represented by the above formulas (I) to (VI) can be made into a solid electrolyte layer by pressing them to a predetermined thickness, for example. A pressure of the pressing can be selected, for example, from pressures within a range from 50 to 2000 Mpa.

(Electrode)

One embodiment of the present invention provides an electrode including the solid electrolyte material represented by the above formulas (I) to (VI). The electrode may be a positive electrode or a negative electrode. An amount of the solid electrolyte material of the present invention contained in the electrode is not particularly limited, but can be within a range from Electrode 1 to 50 mass% of the electrode, for example. The electrode may contain a positive electrode active material and a negative electrode active material commonly used in this field, as well as the binding material, the conductive material and the solid electrolyte other than the solid electrolyte material of the present invention as described above.

Examples of the positive electrode active material include $Li_4Ti_5O_{12}$, $LiCoO_2$, $LiMnO_2$, $LiVO_2$, $LiCrO_2$, $LiNiO_2$, $Li_2NiMn_3O_8$, $LiNi_{1/3}Co_{1/3}Mn_{1/3}O_2$, FeS, $Ti_2S$, $LiFeO_2$, $Li_3V_2(PO_4)_3$ and $LiMn_2O_4$. One of these positive electrode active materials may be used alone or two or more may be used in combination.

Examples of the negative electrode active material include carbon-based material such as natural graphite, artificial graphite, acetylene black, Ketjen black, Denka black, carbon black, and VCGF, metal such as Si, Li alloy, Na alloy, Au, Pt, Pd, Ag, Al, Bi, Sn, Sb, Zn, Mg, K, Ca, and Na, oxides of various transition metals such as $Li_{4/3}Ti_{5/3}O_4$, $Li_3V_2(PO_4)_3$ and SnO. One of these negative electrode active materials may be used alone or two or more may be used in combination.

The electrode can be obtained in a pellet form or in a sheet form by, for example, mixing an electrode active material and optionally a binding material, a conductive material or an electrolyte and pressing the obtained mixture.

(Electrode composite)

The present invention also provides an electrode composite in which the electrode of the present invention and a current collector are combined.

As a current collector, a material, a shape and the like are not particularly limited as long as it can be combined with the electrode of the present invention and can fulfill a function as a current collector. The shape of the current collector may be a uniform alloy plate or a perforated shape. It may also be in a foil, sheet, or film form.

As a material of the current collector, for example, Al, Ni, Ti, Mo, Ru, Pd, stainless steel or steel can be raised. The current collector may be coated with any one of Au, Al, and C in addition to the above materials. A thickness of the coating is not particularly limited, but is preferably 10 nm to 2 $\mu$m. In addition, it is also preferable that the coating have a uniform thickness.

The method of coating is not particularly limited, as long as the current collector can be coated; for example, a sputter coater can be used to form the coating through vapor deposition on the surface.

The electrode composite of the present invention may be formed by combining materials formed as an electrode and a current collector, respectively, or by forming an electrode directly on a current collector. For direct formation, an electrode active material may be applied to a surface of the current collector using a known method.

(All-solid-state secondary battery)

The present invention provides an all-solid-state secondary battery containing the solid electrolyte composite of the present invention and/or the electrode of the present invention. In the all-solid-state secondary battery, a solid electrolyte layer containing the solid electrolyte composite of the present invention may be combined with a positive electrode and a negative electrode commonly used in this field, a solid electrolyte layer containing the solid electrolyte composite of the present invention may be combined with the electrode of the present invention, or a solid electrolyte layer commonly used in this field may be combined with the electrode of the present invention.

The all-solid-state secondary battery can be obtained, for example, by laminating a positive electrode, a solid electrolyte layer, a negative electrode and a current collector, pressing them to obtain a cell, and then fixing this in a container.

A metal layer selected from Au, Pt, In, Al, Sn, Si, or the like may be provided between the electrode and the solid electrolyte layer. A thickness of the metal layer is preferably 10 nm to 100 $\mu$m.

EXAMPLES

Hereinafter, the present invention is further specifically explained by way of Working Examples and Comparative Examples which do not limit the present invention.

In the following Examples and Comparative Examples, $Li_2S$ from Mitsuwa Chemicals Co., Ltd (99.9% pure, 200 mesh), $P_2S_5$ from Sigma-Aldrich Co. LLC (99.9% pure), $SnS_2$ from Mitsuwa Chemicals Co., Ltd (99.5% pure), and LiI from Sigma-Aldrich Co. LLC (anhydrous beads, 99.999% pure, -10 mesh) were used.

In the following Examples and Comparative Examples, Planetary Ball Mill Apparatus P-5 manufactured by Fritsch was used as a planetary ball mill. A fully automatic multipurpose X-ray diffractometer SmartLab manufactured by Rigaku was used as an X-ray diffractometer. An impedance analyzer (SI-1260) manufactured by Solartron was used to measure ion and electronic conductivities. For a differential thermal analyzer, TG-DTA (Thermo plus EV02 TG-DTA8121) manufactured by Rigaku was used.

Example 1: Preparation 1 of Li-P-Sn-S-I-based solid electrolyte material

(Mixing step)

3 g of $Li_2S$, $P_2S_5$, $SnS_2$ and LiI were weighed to attain a molar ratio of $Li_2S:P_2S_5:SnS_2:LiI = 25:7:2:8$. These compounds as raw materials were weighed and put into a zirconia pot (250 mL) together with zirconia balls (4 mm$\varphi$, 450 g) in the order of weighing to obtain a mixture of $Li_2S$, $P_2S_5$, $SnS_2$ and LiI. The operation was carried out in a globe box under an argon atmosphere, and the work was carried out under an environment with a moisture value of -70°C or more and an oxygen concentration of 10 ppm or less (all works performed in the globe box hereinafter were carried out under these conditions).

(Amorphization step)

The mixture obtained in the mixing step was subjected to a mechanochemical treatment by a dry method using Planetary Ball Mill Apparatus P-5 manufactured by Fritsch. Conditions for the mechanochemical treatment were a base plate rotational speed of 250 rpm and a treatment time of 80 hours. An amorphous body was thus obtained.

(Heat treatment step)

A pellet was molded by adding 0.13g of the obtained amorphous body into a 10 mm diameter rod and subjecting it to uniaxial pressing at a pressure of 360 MPa for 5 minutes using a hydraulic press. The molded pellet was subjected to heat treatment. In the heat treatment, the pellet was placed in an electric furnace under an argon atmosphere and treated at 250°C for 1 hour to obtain a heat-treated pellet. For a temperature for the heat treatment, the temperature of a core tube of the electric furnace was measured. An actual temperature of the pellet undergoing heat treatment is within a range from a temperature set for the electric furnace to -(minus) 20°C below this set temperature. Thus, $Li_{7.25}P_{1.75}Sn_{0.25}S_8I$ $[(Li_3PS_4)_{0.583}(Li_4SnS_4)_{0.083}(LiI)_{0.333}$ or $(Li_3PS_4)_{7/12}(Li_4SnS_4)_{1/12}(LiI)_{4/12}]$, which is a Li-P-Sn-S-I-based solid electrolyte material, was prepared and used as the material of Example 1.

Example 2: Preparation 2 of Li-P-Sn-S-I-based solid electrolyte material

$Li_{7.5}P_{1.5}Sn_{0.5}S_8I[(Li_3PS_4)_{0.5}(Li_4SnS_4)_{0.167}(LiI)_{0.333}$ or $(Li_3PS_4)_{3/6}(Li_4SnS_4)_{1/6}(LiI)_{2/6}]$, which is a Li-P-Sn-S-I-based solid electrolyte material, was prepared and used as the material of Example 2, in the same manner as in Example 1 except that $Li_2S$, $P_2S_5$, $SnS_2$ and LiI were weighed so as to have a molar ratio of $Li_2S:P_2S_5:SnS_2:LiI = 13:3:2:4$ to obtain a mixture and that a pellet was molded from 0.1277g of an amorphous body obtained from the mixture.

Example 3: Preparation 3 of Li-P-Sn-S-I-based solid electrolyte material

$Li_{23}P_4Sn_2S_{24}I_3[(Li_3PS_4)_{0.444}(Li_4SnS_4)_{0.222}(LiI)_{0.333}$ or $(Li_3PS_4)_{4/9}(Li_4SnS_4)_{2/9}(LiI)_{3/9}]$, which is a Li-P-Sn-S-I-based solid electrolyte material, was prepared and used as the material of Example 3, in the same manner as in Example 1 except that $Li_2S$, $P_2S_5$, $SnS_2$ and LiI were weighed so as to have a molar ratio of $Li_2S:P_2S_5:SnS_2:LiI = 10:2:2:3$ to obtain a mixture and that a pellet was molded from 0.1488g of an amorphous body obtained from the mixture.

Example 4: Preparation 4 of Li-P-Sn-S-I-based solid electrolyte material

$Li_{14}P_3SnS_{16}I[(Li_3PS_4)_{0.6}(Li_4SnS_4)_{0.2}(LiI)_{0.2}]$, which is a Li-P-Sn-S-I-based solid electrolyte material, was prepared and used as the material of Example 4, in the same manner as in Example 1 except that $Li_2S$, $P_2S_5$, $SnS_2$ and LiI were weighed so as to have a molar ratio of $Li_2S:P_2S_5:SnS_2:LiI = 13:3:2:2$ to obtain a mixture.

Comparative Example 1: Unheated material of $Li_{7.25}P_{1.75}Sn_{0.25}S_8I$

A material of Comparative Example 1 was prepared in the same manner as in Example 1 except that 0.13g of the Li-P-Sn-S-I-based amorphous body of Example 1 was molded into a pellet and was not heated.

Comparative Example 2: Unheated material of $Li_{7.5}P_{1.5}Sn_{0.5}S_8I$

A material of Comparative Example 2 was prepared in the same manner as in Example 1 except that 0.13g of the Li-P-Sn-S-I-based amorphous body of Example 2 was molded into a pellet and was not heated.

Comparative Example 3: Unheated material of $Li_{23}P_4Sn_2S_{24}I_3$

A material of Comparative Example 3 was prepared in the same manner as in Example 1 except that 0.13G of the Li-P-Sn-S-I-based amorphous body of Example 3 was molded into a pellet and was not heated.

Comparative Example 4: Unheated material of $Li_{14}P_3SnS_{16}I$

A material of Comparative Example 4 was prepared in the same manner as in Example 1 except that 0.13g of the Li-P-Sn-S-I-based amorphous body of Example 1 was molded into a pellet and was not heated.

Comparative Example 5: $Li_8PSnS_8I$ amorphous body

An amorphous body of $Li_8PSnS_8I$ was obtained through the same procedure as in the (mixing step) and (amorphization step) of Example 1 except that $Li_2S$, $P_2S_5$, $SnS_2$ and LiI were weighed in a molar ratio of $Li_2S:P_2S_5:SnS_2:LiI$ = 7:1:2:2. A pellet was molded from 0.13 g of this amorphous body to obtain a material of Comparative Example 5.

Comparative Example 6: $Li_{8.5}P_{0.5}Sn_{1.5}S_8I$ amorphous body

An amorphous body of $Li_{8.5}P_{0.5}Sn_{1.5}S_8I$ was obtained through the same procedure as in the (mixing step) and (amorphization step) of Example 1 except that $Li_2S$, $P_2S_5$, $SnS_2$ and LiI were weighed in a molar ratio of $Li_2S:P_2S_5:SnS_2:LiI$ = 15:1:6:4. A pellet was molded from 0.13 g of this amorphous body to obtain a material of Comparative Example 6.

Comparative Example 7: Heat-treated material of $Li_8PSnS_8I$

A pellet was molded from 0.13g of the $Li_8PSnS_8I$ amorphous body obtained in Comparative Example 5. The pellet was treated in the same manner as in the (heat treatment step) of Example 1 to obtain a material of Comparative Example 7.

Comparative Example 8: Heat-treated material of $Li_{8.5}P_{0.5}Sn_{1.5}S_8I$

A pellet was molded from 0.13g of the $Li_{8.5}P_{0.5}Sn_{1.5}S_8I$ amorphous body obtained in Comparative Example 5. The pellet was treated in the same manner as in the (heat treatment step) of Example 1 to obtain a material of Comparative Example 8.

Reference Sample 1: $Li_3PS_4$

As a reference sample, $Li_3PS_4$ was prepared through the same procedure as in Example 1 except that $Li_2S$ and $P_2S_5$ were weighed in a molar ratio of $Li_2S:P_2S_5$ = 3:1, and used as a material of Reference Sample 1.

Reference Sample 2: $Li_4SnS_4$

As a reference sample, $Li_4SnS_4$ was prepared through the same procedure as in Example 1 except that $Li_2S$ and $SnS_2$ were weighed in a molar ratio of $Li_2S:SnS_2$ = 1:1, and used as a material of Reference Sample 2.

(XRD measurement)

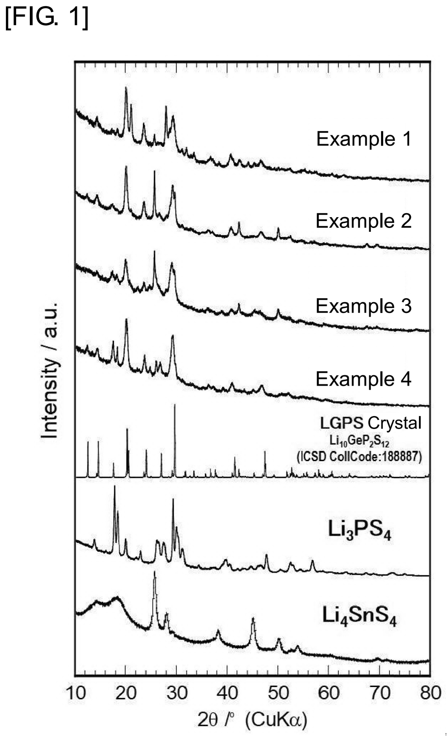

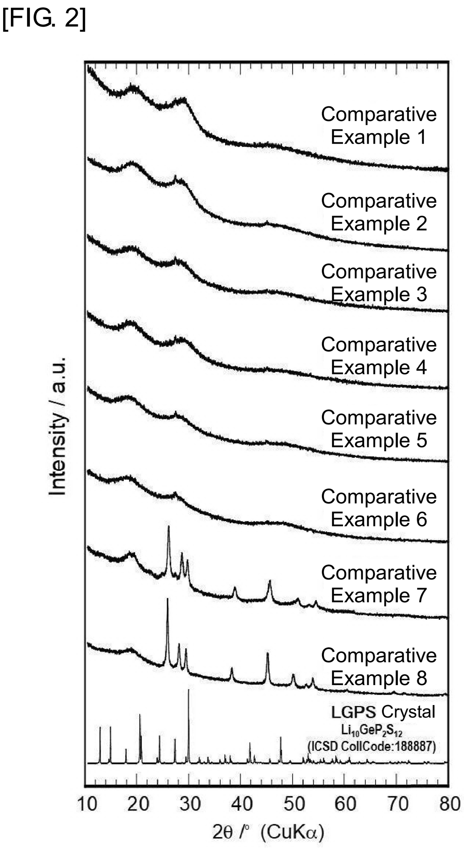

Each of the materials for Examples 1 to 4, Comparative Examples 1 to 8, and Reference Samples 1 and 2 was subjected to X-ray diffraction (XRD) measurement. Using SmartLab as the X-ray diffractometer, structural analysis was performed with CuK$\alpha$ rays (= $1.54056 \times 10^{-10}$ m) at a tube voltage of 45 kV, a tube current of 200 mA, a scanning angle of $2\theta$ = 10°to80°, a sampling interval of 0.02° and a scanning speed of 10°min$^{-1}$. Measurement results are shown in FIGS. 1 and 2. FIG. 1 shows the results on Examples 1 to 4 and Reference Samples 1 and 2, and FIG. 2 shows the results on Comparative Examples 1 to 8. FIGS. 1 and 2 also show the X-ray diffraction pattern of the LGPS crystal. It can be seen from FIGS. 1 and 2 that each of the materials of Examples 1 to 4 became an amorphous body through the mechanochemical treatment, and then recrystallized when heated, resulting in a glass-ceramic state. Further, it can be seen from FIG. 1 that each of the materials of Examples 1 to 4 have the following characteristics:

- having a characteristic peak at $2\theta = 20.0° \pm 0.5°$, $23.5° \pm 0.5°$, $29.0° \pm 0.5°$, $41.0° \pm 1.0°$, $47.0° \pm 1.0°$;
- a peak intensity of the peak at $20.0° \pm 0.5°$ being greater than a peak intensity of the peak at $23.5° \pm 0.5°$; and
- peak intensities of the peaks at $2\theta = 20.0° \pm 0.5°$ and $29.0° \pm 0.5°$ being greater than peak intensities of the peaks at $41.0° \pm 1.0°$ and $47.0° \pm 1.0°$, respectively.

The X-ray diffraction pattern of each of the materials of Examples 1 to 4 has an X-ray diffraction pattern similar to the peak of the LGPS crystal described as a reference, but has a partially different configuration. For example, the peaks of the materials of Examples 1 to 4 at $2\theta = 20.0° \pm 0.5°$, $23.5° \pm 0.5°$, $29.0° \pm 0.5°$, $41.0° \pm 1.0°$ and $47.0° \pm 1.0°$ are different from the peak of LGPS crystal. It can be seen from this that each of the materials of Examples 1 to 4 has a crystal phase that is similar to, but different in configuration from, the LGPS crystal. From the above, it was shown that the Li-P-Sn-S-I-based solid electrolyte materials described in Examples 1 to 4 include an LGPS-like crystal phase.

(Measurement of ion conductivity ($\sigma$))

An ion conductivity ($\sigma$) was measured using each of the materials of Examples 1 to 4 and Comparative Examples 1 to 8. An AC impedance was measured using an impedance analyzer (SI 1260) at a measurement frequency of 0.1 Hz to $1 \times 10^6$ Hz and an AC amplitude of 10 mV; an ion conductivity $\sigma$ was determined from the following formula, with an intersection of a semicircle and a real axis of the resultant impedance plot being taken as a resistance R of the material.

$$\sigma = (1/R) \cdot (L/S) \ (1)$$

L: pellet thickness (cm), S: electrode surface area ($0.785 \ cm^2$)

Tables 1 and 2 show the ion conductivity ($\sigma$) of each of the materials of Examples 1 to 4 and Comparative Examples 1 to 8. Table 1 shows the results on the materials of Examples 1 to 4, and Table 2 shows the results on the materials of Comparative Examples 1 to 8.

[Table 1]

|  | a | b | c | a/b | c/(a+b) | temperature for the heat treatment (°C) | ion conductivity (S cm$^{-1}$) |
|---|---|---|---|---|---|---|---|
| Examples 1 | 0.583 | 0.083 | 0.333 | 7 | 0.5 | 250 | $5.8 \times 10^{-3}$ |
| Examples 2 | 0.5 | 0.167 | 0.333 | 3 | 0.5 | 250 | $6.8 \times 10^{-3}$ |
| Examples 3 | 0.444 | 0.222 | 0.333 | 2 | 0.5 | 250 | $2.9 \times 10^{-3}$ |
| Examples 4 | 0.6 | 0.2 | 0.2 | 3 | 0.25 | 250 | $3.7 \times 10^{-3}$ |

[Table 2]

|  | a | b | c | a/b | c/(a+b) | temperature for the heat treatment (°C) | ion conductivity (S cm$^{-1}$) |
|---|---|---|---|---|---|---|---|
| Comparative Examples 1 | 0.583 | 0.083 | 0.333 | 7 | 0.5 | - | $9.2 \times 10^{-4}$ |
| Comparative Examples 2 | 0.5 | 0.167 | 0.333 | 3 | 0.5 | - | $7.2 \times 10^{-4}$ |
| Comparative Examples 3 | 0.444 | 0.222 | 0.333 | 2 | 0.5 | - | $7.3 \times 10^{-4}$ |
| Comparative Examples 4 | 0.6 | 0.2 | 0.2 | 3 | 0.25 | - | $5.4 \times 10^{-4}$ |
| Comparative Examples 5 | 0.333 | 0.333 | 0.333 | 1 | 0.5 | - | $4.3 \times 10^{-4}$ |
| Comparative Examples 6 | 0.167 | 0.5 | 0.333 | 0.333 | 0.5 | - | $2.4 \times 10^{-4}$ |
| Comparative Examples 7 | 0.333 | 0.333 | 0.333 | 1 | 0.5 | 250 | $3.3 \times 10^{-4}$ |
| Comparative Examples 8 | 0.167 | 0.5 | 0.333 | 0.333 | 0.5 | 250 | $7.5 \times 10^{-5}$ |

It can be seen from Tables 1 and 2 that the solid electrolyte material including an LGPS-like crystal phase described in Examples 1 to 4 has excellent ion conductivity. These ion conductivities shown in Table 1 are much higher than those of any known solid electrolyte having an LGPS-like phase. This demonstrates that the novel material of the present invention, which includes the LGPS-like crystal phase, possesses very excellent properties as a solid electrolyte.

**Claims**

1. A solid electrolyte material including an LGPS-like crystal phase represented by

$$(Li_3PS4)_a(Li_4SnS4)b(LiX)_c \qquad (I)$$

(wherein $a > 0$; $b > 0$; $c > 0$; $a + b + c = 1.0$; $2.0 \le a/b \le 9.0$; $c/(a + b) \ge 0.20$, and X represents Cl, Br or I).

2. The solid electrolyte material according to claim 1 wherein X is I.

3. The solid electrolyte material according to claim 1, wherein $c/(a + b) \ge 0.25$.

4. The solid electrolyte material according to claim 1, wherein $c = 0.33$; and $2.0 \le a/b \le 7.0$.

5. The solid electrolyte material according to claim 1, wherein $c = 0.33$; $a/b = 3$; and $c/(a + b) = 0.5$.

6. The solid electrolyte material according to claim 1, wherein the LGPS-like crystal phase is a crystal phase having an X-ray diffraction pattern using CuK$\alpha$ radiation **characterized by**:

   having a peak at $2\theta = 20.0° \pm 0.5°$, $23.5° \pm 0.5°$, $29.0° \pm 0.5°$, $41.0° \pm 1.0°$, $47.0° \pm 1.0°$;
   a peak intensity of the peak at $20.0° \pm 0.5°$ being greater than a peak intensity of the peak at $23.5° \pm 0.5°$; and
   peak intensities of the peaks at $2\theta = 20.0° \pm 0.5°$ and $29.0° \pm 0.5°$ being both greater than peak intensities of the peaks at $41.0° \pm 1.0°$ and $47.0° \pm 1.0°$.

7. A solid electrolyte composite comprising the solid electrolyte material according to any one of claim 1 to claim 6.

8. An electrode comprising the solid electrolyte material according to any one of claim 1 to claim 6.

9. A method for manufacturing a solid electrolyte material including an LGPS-like crystal phase represented by the following composition formula:

$$(Li_3PS4)_a(Li_4SnS4)b(LiX)_c \qquad (I)$$

(wherein $a > 0$; $b > 0$; $c > 0$; $a + b + c = 1.0$; $2.0 \le a/b \le 9.0$; $c/(a + b) \ge 0.20$, and X represents Cl, Br or I), the method comprising:

   a mixing step of raw materials so as to contain all of Li, P, S, Sn, and X, the raw materials being selected at least one from each of a first substance containing Li and/or P, a second substance containing Sn and/or S, and a third substance containing X (where X is Cl, Br, or I);
   an amorphization step of amorphizing the mixture obtained in the mixing step; and
   a heat treatment step of heat-treating an amorphous body obtained in the amorphization step.

10. The method for manufacturing the solid electrolyte material according to claim 9 wherein in the amorphization step, the mixture is amorphized using a mechanochemical method.

11. The method for manufacturing the solid electrolyte material according to claim 9, wherein the first substance is $Li_2S$ and $P_2S_5$, the second substance is $SnS_2$, and the third substance is LiX.

12. The method for manufacturing the solid electrolyte material according to claim 9, wherein X is I.

13. The method for manufacturing the solid electrolyte material according to claim 9, wherein in the heat treatment step, the heat treatment is performed at a temperature of 200 to 300°C.

[FIG. 1]

[FIG. 2]

## INTERNATIONAL SEARCH REPORT

| International application No. |
|---|
| **PCT/JP2024/012733** |

**A. CLASSIFICATION OF SUBJECT MATTER**

*H01B 1/10*(2006.01)i; *H01B 1/06*(2006.01)i; *H01B 13/00*(2006.01)i; *H01M 10/0562*(2010.01)i
FI:   H01B1/10; H01B1/06 A; H01B13/00 Z; H01M10/0562

According to International Patent Classification (IPC) or to both national classification and IPC

**B. FIELDS SEARCHED**

Minimum documentation searched (classification system followed by classification symbols)

H01B1/10; H01B1/06; H01B13/00; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-102263 A (TOYOTA JIDOSHA KABUSHIKI KAISHA) 24 June 2019 (2019-06-24) entire text, all drawings | 1-13 |
| A | JP 2022-135383 A (THE NATIONAL INSTITUTE OF ADVANCED INDUSTRIAL SCIENCE AND TECHNOLOGY) 15 September 2022 (2022-09-15) entire text, all drawings | 1-13 |
| A | JP 2022-139139 A (THE NATIONAL INSTITUTE OF ADVANCED INDUSTRIAL SCIENCE AND TECHNOLOGY) 26 September 2022 (2022-09-26) entire text, all drawings | 1-13 |
| A | JP 2020-27781 A (MITSUBISHI GAS CHEMICAL CO., INC.) 20 February 2020 (2020-02-20) entire text, all drawings | 1-13 |

☑ Further documents are listed in the continuation of Box C.     ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **16 May 2024** | **28 May 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**EP 4 693 341 A1**

## INTERNATIONAL SEARCH REPORT

International application No.

**PCT/JP2024/012733**

### C. DOCUMENTS CONSIDERED TO BE RELEVANT

| Category* | Citation of document, with indication, where appropriate, of the relevant passages | Relevant to claim No. |
|---|---|---|
| A | 山本健太郎,外9名. Li3PS4-Li4SnS4系ガラス固体電解質の局所構造とイオン伝導度との相関関係. 第63回電池討論会 講演要旨集. The Electrochemical Society of Japan, 10 November 2022, p. 1B12, non-official translation (YAMAMOTO, Kentaro et al. Correlation between Li3PS4-Li4SnS4 Glass Solid Electrolyte Local Structure and Ionic Conductance. Proceedings of the 63rd Battery Symposium in Japan.) entire text, all drawings | 1-13 |
| A | JP 2020-15661 A (TOYOTA MOTOR ENGINEERING & MANUFACTURING NORTH AMERICA, INC.) 30 January 2020 (2020-01-30) entire text, all drawings | 1-13 |

Form PCT/ISA/210 (second sheet) (July 2022)

**INTERNATIONAL SEARCH REPORT**
Information on patent family members

International application No.

**PCT/JP2024/012733**

| Patent document cited in search report | | | Publication date (day/month/year) | Patent family member(s) | | Publication date (day/month/year) |
|---|---|---|---|---|---|---|
| JP | 2019-102263 | A | 24 June 2019 | (Family: none) | | |
| JP | 2022-135383 | A | 15 September 2022 | (Family: none) | | |
| JP | 2022-139139 | A | 26 September 2022 | (Family: none) | | |
| JP | 2020-27781 | A | 20 February 2020 | (Family: none) | | |
| JP | 2020-15661 | A | 30 January 2020 | US 2020/0030768 A1 entire text, all drawings EP 3599659 A1 CN 110783567 A | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019239949 A